# EUROPÄISCHE PATENTSCHRIFT

(11) **EP 3 269 221 B1**
(45) Veröffentlichungstag und Bekanntmachung des Hinweises auf die Patenterteilung: **11.11.2020**
(21) Anmeldenummer: 17401071.0
(22) Anmeldetag: 05.07.2017
(51) Int. Cl.: A01C 5/06

(54) **LANDWIRTSCHAFTLICHE SÄMASCHINE MIT STREICHELEMENT**
AGRICULTURAL SOWING MACHINE WITH SEED FIRMER
SEMOIR AGRICOLE COMPRENANT UN ÉLÉMENT DE TASSEMENT DE GRAINES

(30) Priorität: 11.07.2016 DE 102016112635
(43) Veröffentlichungstag der Anmeldung: 17.01.2018
(73) Patentinhaber: Amazonen-Werke H. Dreyer GmbH & Co. KG, 49205 Hasbergen (DE)
(72) Erfinder: Hüer, Berthold, 49740 Haselünne (DE); Tanke, Christian, 01723 Kesselsdorf (DE)

(56) Entgegenhaltungen:
- US-A- 5 425 318
- US-A1- 2005 241 554
- US-B1- 6 666 156

## Beschreibung

Die Erfindung betrifft eine landwirtschaftliche Sämaschine gemäß des Oberbegriffes des Patentanspruches 1.

Eine derartige Sämaschine ist in US 5 425 318 A beschrieben. Die Sämaschine weist zumindest eine Furchenöffnungsvorrichtung auf, der eine Saatgutabgabevorrichtung zugeordnet ist. Die Saatgutabgabevorrichtung legt das Saatgut in der geöffneten Furche ab. Ein Zustreich- und/oder Andrückelement schließt die geöffnete Furche nach der Saatgutablage und bedeckt die Furche mit Erde. Der Saatgutabgabevorrichtung ist ein Streichelement zugeordnet, welches einen ersten oberen, einen zweiten mittleren und einen dritten unteren Bereich aufweist. Mit dem ersten oberen Bereich ist das Streichelement auf der in Fahrtrichtung rückwärtigen Seite der Saatgutablagevorrichtung befestigt. Der zweite mittlere Bereich des Streichelements ist flexibel ausgebildet und zur Leitung des Saatguts geeignet gekrümmt. Der dritte untere Bereich des Streichelements ist zum Saatfurchengrund hin konvex geformt und besteht aus glattem, abriebfestem Material. Das Streichelement ragt in Fahrtrichtung gesehen nach hinten in die Saatfurche hinein. In der Saatfurche streicht das Streichelement über den Saatfurchengrund und auf diesem abgelegtes Saatgut. Gegen den Saatfurchengrund ist das Streichelement durch den Arbeitsdruck der Furchenöffnungsvorrichtung derart mit Druck beaufschlagt, dass abgelegtes Saatgut bis zu einer geeigneten Tiefe in den Saatfurchengrund gedrückt wird.

Während des Säbetriebes ist ein derartig ausgeführtes Streichelement aufgrund des beaufschlagten Drucks und der gleichzeitigen Bewegung der Sämaschine in Fahrtrichtung großen mechanischen Belastungen ausgesetzt. Diese bewirken typischerweise ein Längen und Verbiegen des Streichelements und somit im Laufe der Einsatzzeit eine dauerhafte Verformung. Es besteht dabei in nachteiliger Weise die Gefahr, dass das Streichelement die ihm angedachte Funktion nicht mehr zuverlässig erfüllen kann. Zugleich kann das gelängte Streichelement unter die Zustreich- und/oder Andrückvorrichtung geraten und beschädigt werden.

Der Erfindung liegt daher die Aufgabe zugrunde, die beschriebenen Nachteile abzustellen und ein Streichelement bereitzustellen, welches die Saatgutführung in die Saatfurche und/oder das Andrücken des Saatguts auf dem Saatfurchengrund gewährleistet und unempfindlich gegen dauerhaftes Verformen ist.

Die Aufgabe wird erfindungsgemäß dadurch gelöst, dass das Streichelement im zweiten mittleren Bereich bogenförmig ausgestaltet ist und der Bogen in Fahrtrichtung nach vorn weist und über den ersten oberen Bereich in Fahrtrichtung gesehen hinausragt.

Das Streichelement ist mit der in Fahrtrichtung vorderen Seite seines ersten oberen Bereichs an der in Fahrtrichtung rückwärtigen Seite der Saatgutabgabevorrichtung befestigt. Durch die erfindungsgemäße Ausgestaltung ergibt sich dabei der Vorteil, dass die konvex gekrümmte Seite des Streichelements in Fahrtrichtung nach vorn zur Saatgutablagevorrichtung weist. Diese Ausgestaltung hat sich überraschender Weise als sehr formbeständig und unempfindlich gegen von außen einwirkende Kräfte erwiesen.

Die Bahnkurve des von der Saatgutabgabevorrichtung abgegebenen Saatguts wird durch die Kombination ihrer Bewegung nach unten in Richtung der Saatfurche und ihrer Bewegung in Fahrtrichtung, festgelegt durch die Vortriebsgeschwindigkeit der Sämaschine in Fahrtrichtung und einer einsetzenden, luftwiderstandbedingten Bremswirkung bei Verlassen der Saatgutabgabevorrichtung, bestimmt. In dieser Kombination beschreibt die Bahnkurve des Saatguts einen in Fahrtrichtung nach vorn konvex gekrümmten Bogen.

Durch die erfindungsgemäße Bogenform des Streichelements schmiegt sich das der beschriebenen Bahnkurve folgende Saatgut an die in Fahrtrichtung nach vorn weisende, konvex gekrümmte Seite des Streichelements an. Dadurch dient das Streichelement in vorteilhafter Weise der Führung des von der Saatgutabgabevor richtung abgegebenen Saatguts in die Saatfurche.

Durch den in Fahrtrichtung über den ersten oberen Bereich des Streichelements hinausragenden Bogen des Streichelements ist das Streichelement im Übergang zwischen dem ersten oberen und dem zweiten mittleren Bereich in Richtung der Fahrtrichtung gekrümmt. Damit ist die Krümmung des Streichelements der entgegen der Fahrtrichtung gerichteten, das Längen verursachenden Kraftwirkung entgegengerichtet. Somit wird eine hohe Biegesteifigkeit des Streichelements in Fahrtrichtung der Sämaschine erreicht. Dadurch entsteht der Vorteil, dass die erfindungsgemäße Krümmung des Streichelements einem Längen entgegenwirkt. Dadurch wird die Lebensdauer des Streichelements erheblich erhöht.

Es ist vorteilhaft, dass das Streichelement zumindest annähernd S-förmig ist. In dieser Ausgestaltung ist die beschriebene Krümmung besonders einfach umzusetzen.

Es wird ein besonderer Vorteil dadurch erreicht, dass das Streichelement und die Saatgutabgabevorrichtung derart zueinander angeordnet sind, dass sich das von der Saatgutabgabevorrichtung abgegebene Saatgut tangential entlang der Krümmung des Streichelements bewegt. Dies ist für eine zuverlässige Führung des Saatguts in die Saatfurche durch das Streifelement vorteilhaft, weil durch die tangentiale Führung des Saatguts entlang der Krümmung des Streifelements eine sanfte Bewegungsübernahme ermöglicht wird. Das auf das Streifelement treffende Saatgut kann somit nicht gegen das Streifelement stoßen. Ein Stoßen gegen das Streifelement würde das Saatgut reflektieren und eine zuverlässige Ablage des Saatguts in der Saatfurche behindern.

Es ist besonders vorteilhaft, dass der erste obere Bereich des Streichelements, insbesondere parallel zur Fahrtrichtung, biegesteif ausgeführt ist. Somit ist eine sichere Befestigung des Streifelements an der Saatgutablagevorrichtung sichergestellt. Zudem wirkt eine biegesteife Ausführung des ersten oberen Bereichs einem Längen des Streifelements zuverlässig entgegen. Überdies kann das Streifelement nur aufgrund einer Biegesteifigkeit im der Befestigung dienenden ersten, oberen Bereich den zum Andrücken des Saatguts an den Saatfurchengrund notwendigen Druck auf das Saatgut übertragen. Ist das Streifelement hingegen im ersten, oberen Bereich flexibel ausgestaltet, würde es sich aufgrund der Druckbeaufschlagung und der Bewegung in Fahrtrichtung bereits im ersten oberen Bereich, insbesondere in der Nähe der Befestigungselemente nach hinten verbiegen.

Es ist vorteilhaft, dass der erste obere Bereich des Streichelements ein zumindest annähernd T-förmiges Profil, wobei der Mittelsteg in Fahrtrichtung nach hinten weist, aufweist. Die Materialstärke in diesem Befestigungsbereich steigt dadurch an, weswegen beispielweise ein Abreißen vermieden wird. Durch diese Ausgestaltung wird die Sicherheit der Befestigung des Streifelements an der Saatgutablagevorrichtung verbessert. Zudem ist ein T-förmiges Profil aufgrund seines besonders hohen Flächenträgheitsmoments geeignet, die Biegesteifigkeit des Streifelements erheblich zu verbessern. Damit kein dauerhaftes Verbiegen des Streifelements im der Befestigung dienenden ersten oberen Bereich auftritt, ist das T-förmige Profil im ersten, oberen besonders vorteilhaft.

Es ist ebenfalls vorteilhaft, dass sich das T-förmige Profil bis in den Übergang zwischen dem ersten, oberen und dem zweiten, mittleren Bereich des Streifelements erstreckt. Dieser Übergang umfasst den Beginn des in Fahrtrichtung nach vorn über den ersten, oberen Bereich des Streichelements hinausragenden Bogens des Streifelements. Besonders im Zusammenwirken mit der beschriebenen Krümmung in diesem Bereich, verhindert die durch das T-förmige Profil weiter gesteigerte Biegesteifigkeit ein Längen des Streifelements.

Es ist von Vorteil, dass der erste obere Bereich des Streichelements auf der in Fahrtrichtung vorderen Seite zumindest zwei Noppen aufweist, welche zum formschlüssigen Eingriff in zumindest zwei Aussparungen der Saatgutabgabevorrichtung geeignet sind. Diese Ausgestaltung verbessert die Sicherheit der Befestigung erheblich. Beispielsweise in Kurvenfahrten während des Säbetriebes können an das Streifelement Kräfte quer zur Fahrtrichtung auftreten. Derartige Kräfte führen zu einem Verkanten und/oder Verdrehen des Streifelements quer zur Fahrtrichtung. Um ein solches Verkanten und/oder Verdrehen zu vermeiden, dienen die erfindungsgemäßen Noppen dieser Ausführungsform als Sicherung, da sie ergänzend zu den Befestigungselementen zusätzliche Fixpunkte darstellen.

Weitere Einzelheiten der Erfindung sind der Beispielsbeschreibung und den Zeichnungen zu entnehmen. Die Zeichnungen zeigen
- Fig.1: eine Säschareinheit einer landwirtschaftlichen Sämaschine in perspektivischer Darstellung von schräg hinten,
- Fig.2: eine geöffnete Säschareinheit einer landwirtschaftlichen Sämaschine in perspektivischer Ansicht von schräg hinten,
- Fig.3: die Saatgutabgabevorrichtung mit Streichelement innerhalb der Säschareinheit in perspektivischer Ansicht von schräg hinten,
- Fig.4: das Streichelement in seitlicher Ansicht und
- Fig.5: das Streichelement in perspektivischer Ansicht von schräg hinten.

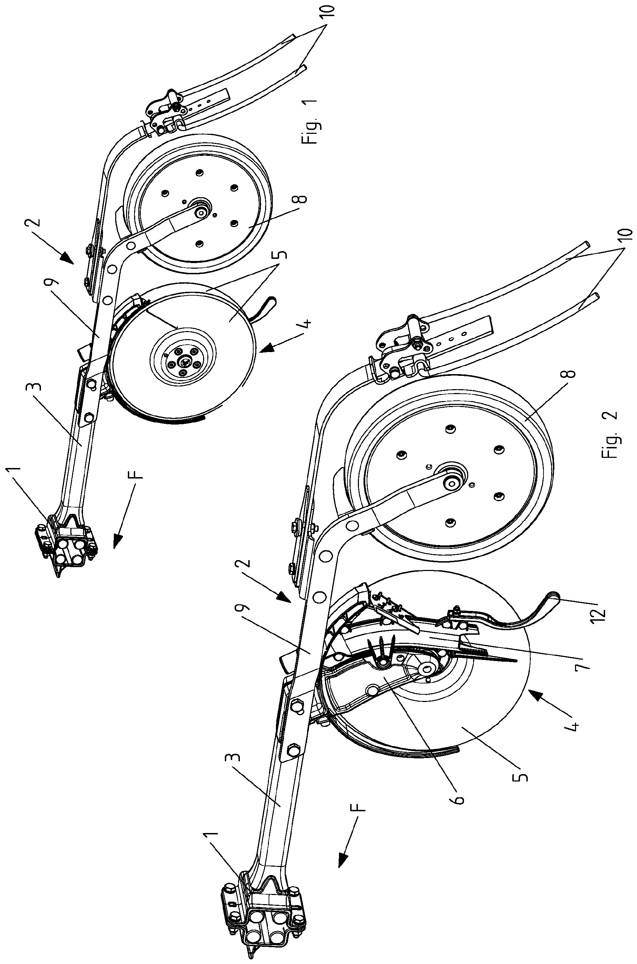

Eine landwirtschaftliche Sämaschine weist typischerweise einen quer zur Fahrtrichtung F ausgerichteten Rahmen auf. Mittels Befestigungselementen 1 sind an dem nicht dargestellten Rahmen mehrere Säschareinheiten 2 befestigt, wie Fig. 1 zeigt.

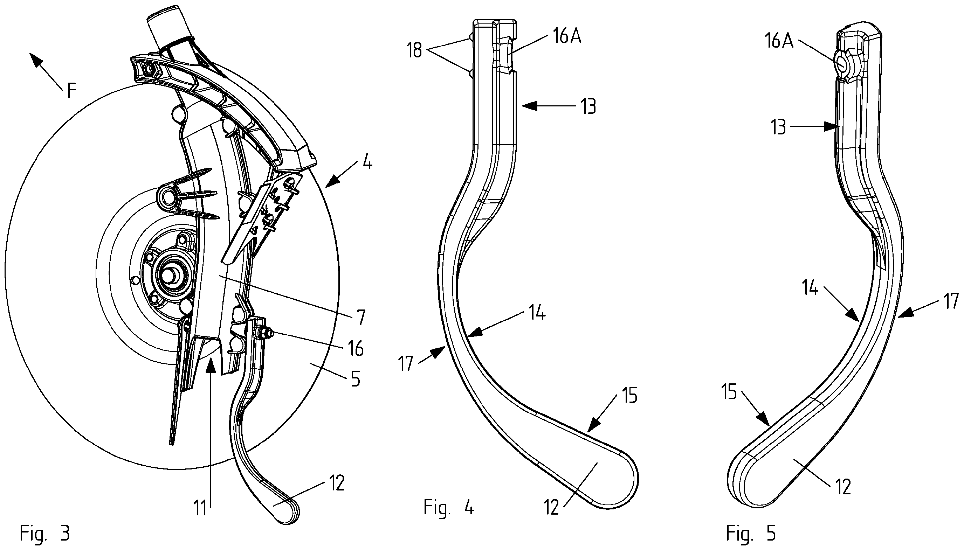

Eine Säschareinheit 2 weist einen in Fahrtrichtung F nach vorn ragenden Tragarm 3 auf, welcher mit dem Befestigungselement 1 verbunden ist. An dem Tragarm 3 ist ein Furchenöffnungselement 4 angeordnet, welches im Beispiel der Fig. 1 bis 3 als Doppelscheibenschar ausgeführt ist. Das Furchenöffnungselement 4 weist zwei V-förmig zueinander angestellte Scharscheiben 5 auf, welche geeignet sind, in den Erdboden einzuschneiden und eine Furche zur Ablage von Saatgut zu öffnen. Die Scharscheiben 5 sind an einem Halteelement 6 drehbar gelagert.

Das Saatgut wird mittels einer Saatgutabgabevorrichtung 7 in der Furche abgelegt. Die Saatgutabgabevorrichtung 7 ist im in Fahrtrichtung F hinteren Bereich der Scharscheiben 5 zentriert zwischen den Scharscheiben 5 oberhalb der Furche an dem Halteelement 6 befestigt. Die zeigt die geöffnete Ansicht der Säschareinheit in Fig. 2.

Eine dem Furchenöffnungselement 4 nachlaufende Andruckrolle 8 schließt die geöffnete Furche nach der Saatgutsablage. Die Andruckrolle 8 ist über einen Haltearm 9 am Tragarm 3 befestigt. Die angedrückte Saatfurche wird anschließend mittels eines mit dem Haltearm 9 verbundenen Zustreichelements 10 mit Erde bedeckt.

Während des Säbetriebes entlässt die Saatgutabgabevorrichtung 7 das abzulegende Saatgut in die Saatfurche. Die Auslassöffnung 11 der Saatgutabgabevorrichtung 7 weist aber auch während des Säbetriebes zum Erdboden und/oder zum Saatfurchengrund eine Entfernung in der Größenordnung von Zentimetern auf. Die sichere Führung des abzulegenden Saatguts wird daher von einem Streichelement 12 gewährleistet.

Das Streichelement 12 ist aus Kunststoff gefertigt und weist einen ersten oberen Bereich 13, einen zweiten mittleren Bereich 14 und einen dritten unteren Bereich 15 auf. In seinem ersten oberen Bereich 13 ist das Streichelement 12 auf der in Fahrtrichtung F rückwärtigen Seite der Saatgutablagevorrichtung 7 mittels geeigneter Befestigungsmittel 16 befestigt. Als Befestigungsmittel 16 dienen beispielsweise Schraub- und/oder Steckverbindungen. Diese werden durch eine entsprechend vorgesehene Aussparung 16A geführt.

Der erste obere Bereich 13 des Streichelements 12 weist ein T-förmiges Profil auf, welches die Biegesteifigkeit des Streichelements im ersten oberen Bereich insbesondere entlang der Fahrtrichtung F erheblich erhöht und ein Längen des Streichelements 12 verhindert. Das T-förmige Profil erstreckt sich vorzugsweise etwa bis zum Übergang zwischen dem ersten oberen Bereich 13 und dem zweiten mittleren Bereich 14. Der Mittelsteg des T-förmigen Profils weist in Fahrtrichtung F nach hinten.

Das Streichelement 12 ist, insbesondere im zweiten mittleren Bereich 14 und dessen Übergängen zu dem ersten oberen Bereich 13 und dem dritten unteren Bereich 15 bogenförmig ausgeführt. Dabei ragt die konvexe Seite des Bogens 17 in Fahrtrichtung F nach vorn über den ersten oberen Bereich 13 hinaus.

Die Form des Bogens 17 ermöglicht im Zusammenwirken mit der Anordnung von Saatgutabgabeelement 7 und dem Streifelement zueinander dem aus der Auslassöffnung 11 der Saatgutabgabevorrichtung 7 entlassenen Saatgut eine tangentiale Bewegung entlang der konvexen Seite des bogenförmigen Streifelements 12. Die konvexe Seite des bogenförmigen Streifelements 12 weist in Richtung der Saatfurche. Damit ist die Führung des Saatguts von der Auslassöffnung 11 des Saatgutabgabeelements 7 in die Saatfurche mittels des Streifelements gewährleistet. Durch die tangentiale Bewegung wird ein Abprallen des Saatguts vom Streifelement vermieden.

Insbesondere im Zusammenwirken mit dem T-förmigen Profil des ersten oberen Bereichs 13 des verhindert die Bogenform des Streichelements 12 ein Längen des Streichelements 12.

Der zweite mittlere Bereich 14 des Streichelements 12 ist flexibel ausgeführt. Somit ist das Streichelement 12 vor überlastbedingten Beschädigungen geschützt. Zudem wird eine Vorspannung des Streifelements 12 gegen den Erdboden erreicht.

Der dritte untere Bereich 15 des Streifelements 12 weist in Fahrtrichtung F nach hinten und ragt in die Saatfurche hinein. Er ist gegenüber der Saatfurche konvex geformt und besteht aus einem glatten, abriebfesten Material. Gegenüber dem Furchengrund ist er aufgrund der flexiblen Ausführung des mittleren zweiten Bereichs 14 vorgespannt und streicht über den Furchengrund und darauf abgelegtes Saatgut. Die Vorspannung bewirkt ein Andrücken der abgelegten Saatkörner an den Furchengrund. Dabei verhindert die glatte Oberfläche ein Zusammenschieben der abgelegten Saatkörner. Dies schafft optimale Keimbedingungen für das Saatgut. Die Abriebfestigkeit schützt das Material des Streifelements 12 und erhöht dessen Lebensdauer erheblich.

Bei Kurvenfahrten während des Säbetriebes wirken Querbelastungen auf das Streifelement 12. Damit sich dieses aufgrund dieser Querbelastungen nicht verkantet und/oder verdreht, ist es auf seiner zur Befestigung an der Saatgutabgabevorrichtung 7 vorgesehenen in Fahrtrichtung F vorderen Seite mit zwei Noppen 18 ausgestattet. Die Noppen 18 greifen formschlüssig in zwei dafür vorgesehene Aussparungen. Somit bilden die beiden Noppen 18 zusätzliche Fixpunkte im Bereich der Befestigung des Streifelements 12 an der Saatgutabgabevorrichtung 7, welche eine Sicherung gegen ein Verkanten und/oder Verdrehen darstellen.

Weist eine Sämaschine mehrere der beschriebenen Säschareinheiten 2 aus, so ist jede dieser Säschareinheiten 2 mit einem erfindungsgemäßen Streichelement 12 ausgestattet.

## Patentansprüche

1. Landwirtschaftliche Sämaschine aufweisend zumindest eine Furchenöffnungsvorrichtung (4), zumindest eine Saatgutabgabevorrichtung (7) zur Saatgutablage in die geöffnete Saatfurche, zumindest ein Zustreich- (10) und/oder Andrückelement zum Schließen der geöffneten Saatfurche, wobei der Saatgutabgabevorrichtung ein Streichelement (12), aufweisend einen ersten oberen, einen zweiten mittleren und einen dritten unteren Bereich (13, 14, 15), zugeordnet ist und das Streichelement in seinem ersten oberen Bereich (13) auf der in Fahrtrichtung (F) gesehen rückwärtigen Seite der Saatgutablagevorrichtung (7) befestigt ist, der zweite mittlere Bereich (14) des Streichelements flexibel ausgebildet und zur Leitung des Saatguts in die Saatfurche geeignet gekrümmt ist, der dritte untere Bereich (15) des Streichelements (12) zum Saatfurchengrund hin konvex geformt ist, aus glattem, abriebfestem Material besteht und in Fahrtrichtung gesehen nach hinten in die Saatfurche hineinragt, wobei das Streichelement in der Saatfurche über den Saatfurchengrund und abgelegtes Saatgut streicht und gegen den Saatfurchengrund durch den Arbeitsdruck der Furchenöffnungsvorrichtung (4) derart mit Druck beaufschlagt ist, dass abgelegtes Saatgut bis zu einer geeigneten Tiefe in den Saatfurchengrund gedrückt wird, wobei das Streichelement (12) im zweiten mittleren Bereich (14) bogenförmig ausgestaltet ist, **dadurch gekennzeichnet, dass** der Bogen in Fahrtrichtung (F) nach vorn weist und über den ersten oberen Bereich in Fahrtrichtung gesehen hinausragt.

2. Sämaschine nach Anspruch 1, **dadurch gekennzeichnet, dass** das Streichelement zumindest annähernd S-förmig ist.

3. Sämaschine nach zumindest einem der vorangegangenen Ansprüche, **dadurch gekennzeichnet, dass** das Streichelement und die Saatgutabgabevorrichtung derart zueinander angeordnet sind, dass sich das von der Saatgutabgabevorrichtung abgegebene Saatgut tangential entlang der Krümmung des Streichelements bewegt.

4. Sämaschine nach zumindest einem der vorangegangenen Ansprüche, **dadurch gekennzeichnet, dass** der erste obere Bereich des Streichelements, insbesondere parallel zur Fahrtrichtung, biegesteif ausgeführt ist.

5. Sämaschine nach zumindest einem der vorangegangenen Ansprüche, **dadurch gekennzeichnet, dass** der erste obere Bereich des Streichelements ein zumindest annähernd T-förmiges Profil, wobei der Mittelsteg in Fahrtrichtung nach hinten weist, aufweist.

6. Sämaschine nach zumindest einem der vorangegangenen Ansprüche, **dadurch gekennzeichnet, dass** der erste obere Bereich des Streichelements auf der in Fahrtrichtung vorderen Seite zumindest zwei Noppen (18) aufweist, welche zum formschlüssigen Eingriff in zumindest zwei Aussparungen der Saatgutabgabevorrichtung (7) geeignet sind.

## Claims

1. Agricultural seed drill having at least one furrow opening device (4), at least one seed dispensing device (7) for seed deposition in the opened seed furrow, at least one covering (10) and/or pressing element for closing the opened seed furrow, wherein the seed dispensing device is assigned a seed firmer (12) having a first upper, a second middle and a third lower region (13, 14, 15), and the seed firmer is fastened, in its first upper region (13), to the rear side, as seen in the direction of travel (F), of the seed dispensing device (7), the second middle region (14) of the seed firmer is configured in a flexible manner and curved in a suitable manner for guiding the seed into the seed furrow, the third lower region (15) of the seed firmer (12) has a convex shape toward the bottom of the seed furrow, consists of smooth, abrasion-resistant material and projects to the rear, as seen in the direction of travel, into the seed furrow, wherein the seed firmer sweeps in the seed furrow over the bottom of the seed furrow and deposited seed and is pressed against the bottom of the seed furrow by the working pressure of the furrow opening device (4) such that deposited seed is pressed into the bottom of the seed furrow to a suitable depth, wherein the seed firmer (12) is configured in an arcuate manner in the second middle region (14), **characterized in that** the arc points forward in the direction of travel (F) and projects beyond the first upper region as seen in the direction of travel.

2. Seed drill according to Claim 1, **characterized in that** the seed firmer is at least approximately S-shaped.

3. Seed drill according to at least one of the preceding claims, **characterized in that** the seed firmer and the seed dispensing device are arranged with respect to one another such that the seed dispensed by the seed dispensing device moves tangentially along the curvature of the seed firmer.

4. Seed drill according to at least one of the preceding claims, **characterized in that** the first upper region of the seed firmer is embodied in a flexurally rigid manner, in particular parallel to the direction of travel.

5. Seed drill according to at least one of the preceding claims, **characterized in that** the first upper region of the seed firmer has an at least approximately T-shaped profile, wherein the central web points toward the rear in the direction of travel.

6. Seed drill according to at least one of the preceding claims, **characterized in that** the first upper region of the seed firmer has, on the front side in the direction of travel, at least two studs (18), which are suitable for engaging in a form-fitting manner in at least two cutouts in the seed dispensing device (7).

## Revendications

1. Semoir agricole, présentant au moins un dispositif de traçage de sillon (4), au moins un dispositif de distribution de semences (7) pour poser des semences dans le sillon de semis tracé, au moins un élément d'aplanissement et/ou de tassement (10) pour fermer le sillon de semis tracé, dans lequel un élément d'aplanissement (12) présentant une première zone supérieure, une deuxième zone intermédiaire et une troisième zone inférieure (13, 14, 15) est associé au dispositif de distribution de semences, et l'élément d'aplanissement est fixé au niveau de sa première zone supérieure (13) sur le côté arrière, vu dans le sens de la marche (F), du dispositif de pose de semences (7), la deuxième zone intermédiaire (14) de l'élément d'aplanissement est réalisée de manière flexible et courbée de manière adéquate pour guider les semences dans le sillon de semis, la troisième zone inférieure (15) de l'élément d'aplanissement (12) est formée de manière convexe en direction du fond de sillon de semis, est composée d'un matériau lisse résistant à l'abrasion, et fait saillie dans le sillon de semis vers l'arrière, vu dans le sens de la marche, dans lequel l'élément d'aplanissement passe dans le sillon de semis sur le fond de sillon de semis et les semences déposées et est sollicité en pression contre le fond de sillon de semis par la pression de travail du dispositif de traçage de sillon (4) de telle sorte que des semences déposées sont enfoncées dans le fond de sillon de semis jusqu'à une profondeur adéquate, l'élément d'aplanissement (12) étant configuré en forme d'arc dans la deuxième zone intermédiaire (14), **caractérisé en ce que** l'arc est orienté vers l'avant dans le sens de la marche (F) et dépasse de la première zone supérieure, vu dans le sens de la marche.

2. Semoir selon la revendication 1, **caractérisé en ce que** l'élément d'aplanissement présente au moins approximativement une forme de S.

3. Semoir selon au moins l'une des revendications précédentes, **caractérisé en ce que** l'élément d'aplanissement et le dispositif de distribution de semences sont disposés l'un par rapport à l'autre de telle sorte que les semences distribuées par le dispositif de distribution de semences se déplacent de manière tangentielle le long de la courbure de l'élément d'aplanissement.

4. Semoir selon au moins l'une des revendications précédentes, **caractérisé en ce que** la première zone supérieure de l'élément d'aplanissement est réalisé de manière à résister à la flexion, en particulier en parallèle au sens de la marche.

5. Semoir selon au moins l'une des revendications précédentes, **caractérisé en ce que** la première zone supérieure de l'élément d'aplanissement présente un profil au moins approximativement en forme de T, la branche du milieu étant orientée vers l'arrière dans le sens de la marche.

6. Semoir selon au moins l'une des revendications précédentes, **caractérisé en ce que** la première zone supérieure de l'élément d'aplanissement présente sur le côté avant dans le sens de la marche au moins deux picots (18) qui sont adaptés à une mise en prise par complémentarité de forme avec au moins deux évidements du dispositif de distribution de semences (7).
